Europäisches Patentamt

European Patent Office

Office européen des brevets

(11) Veröffentlichungsnummer: **0 505 953 A1**

# (12) EUROPÄISCHE PATENTANMELDUNG

(21) Anmeldenummer: **92104946.6**

(22) Anmeldetag: **21.03.92**

(51) Int. Cl.5: **E02F 9/00**, F16D 41/22, F16H 31/00

(30) Priorität: **28.03.91 DE 4110260**

(43) Veröffentlichungstag der Anmeldung:
**30.09.92 Patentblatt 92/40**

(84) Benannte Vertragsstaaten:
**AT CH DE FR GB IT LI**

(71) Anmelder: **KRUPP MASCHINENTECHNIK GESELLSCHAFT MIT BESCHRÄNKTER HAFTUNG**
**Helenenstrasse 149**
**W-4300 Essen 1(DE)**

(72) Erfinder: **Bartels, Robert-Jan, Dr.-Ing.**
**Am Kirchhof 31**
**W-4300 Essen 17(DE)**
Erfinder: **Näfe, Helmar, Dipl.-Ing.**
**Auf'm Keller 49b**
**W-4300 Essen 1(DE)**
Erfinder: **Piotrowski, Hans-Dieter**
**Sonderwerkstrasse 10**
**W-4300 Essen 1(DE)**

(54) Drehvorrichtung für einen Lagerbolzen.

(57) Die Erfindung bezieht sich auf eine Drehvorrichtung für einen insbesondere hochbeanspruchten Lagerbolzen, der um seine Längsachse drehbar an einem Tragkörper gehalten ist und an dem sich ein Bauteil schwenkbar abstützt.

Zur Vergleichmäßigung der Beanspruchung und des Verschleißes des Lagerbolzens wird mit der Erfindung der Vorschlag unterbreitet, an dem Lagerbolzen (1) drehmomentfest eine Kupplungseinheit (11, 12) anzubringen, die - abhängig von der Schwenkrichtung des Bauteils (9) - den Lagerbolzen (1) entweder nur mit dem Bauteil (9) oder nur mit dem Tragkörper (2) verriegelt.

Dadurch, daß der Lagerbolzen in der einen Schwenkrichtung des Bauteils mit diesem mitbewegt und beim Zurückschwenken durch Verriegelung mit dem Tragkörper festgehalten wird, bewirkt die Erfindung eine von der Schwenkbewegung des Bauteils abgeleitete, über eine längere Zeitspanne betrachtet quasi-kontinuierliche Drehung des Lagerbolzens jeweils um einen von der Größe der Schwenkbewegung abhängigen Winkelbereich.

FIG.1

Die Erfindung betrifft eine Drehvorrichtung für einen insbesondere hochbeanspruchten Lagerbolzen, der um seine Längsachse drehbar an einem Tragkörper gehalten ist und an dem sich ein Bauteil schwenkbar abstützt.

Lagerbolzen müssen aus konstruktiven und/oder einsatzbedingten Gesichtspunkten vielfach in der Weise ausgelegt werden, daß sich insbesondere während des Betriebes der betreffenden Vorrichtung eine außerordentlich hohe Beanspruchung nicht vermeiden läßt. Zusätzliche Schwierigkeiten und Verschleißerscheinungen stellen sich dabei in den Fällen ein, in denen Bauteile lediglich Schwenkbewegungen innerhalb eines kleinen Winkelbereichs ausführen mit der Folge, daß die Beanspruchung sich auf einen immer gleich bleibenden kleinen Bereich der Bolzenoberfläche auswirkt. Dort ergeben sich fortschreitende Oberflächenverformungen, die ggf. auch Kaltverschweißungen nach sich ziehen können. Die damit verbundene Erhöhung des Reibwiderstandes beschleunigt den Verschleiß des Lagerbolzens, dessen Bruch den zeitweiligen Ausfall oder sogar Totalschaden der betreffenden Vorrichtung zur Folge haben kann.

Besonders hoch beansprucht sind Lagerbolzen an Abbruchwerkzeugen (Abbruchzangen, Abbruchscheren), deren Werkzeugblätter (Zangenbacken, Scherenarme) bezüglich des sie abstützenden Tragkörpers insbesondere während des Abbruchvorgangs Schwenkbewegungen lediglich um kleine Winkel ausführen.

Der Erfindung liegt die Aufgabe zugrunde, eine Drehvorrichtung für einen insbesondere hoch beanspruchten Lagerbolzen zu schaffen, die eine gleichmäßigere Beanspruchung und eine Vergleichmäßigung des auftretenden Verschleißes über den gesamten Bolzenumfang zur Folge hat. Die Drehvorrichtung soll möglichst auch derart ausgestaltet sein, daß die Schmierung des Lagerbolzens erleichtert bzw. verbessert wird.

Die Aufgabe wird durch eine Drehvorrichtung gelöst, welche die Merkmale des Anspruchs 1 aufweist. Danach ist an dem Lagerbolzen drehmomentfest eine entrastbar ausgeführte Mitnahme in Form einer Kupplungseinheit angebracht, die - abhängig von der Schwenkrichtung des Bauteils - den Lagerbolzen entweder nur mit dem Bauteil oder nur mit dem Tragkörper verriegelt, welcher über den Lagerbolzen auch das Bauteil trägt.

Dadurch, daß der Lagerbolzen in der einen Schwenkrichtung des Bauteils mit diesem mitbewegt und beim Zurückschwenken durch Verriegelung mit dem Tragkörper festgehalten wird, bewirkt die Erfindung eine von der Schwenkbewegung des Bauteils abgeleitete, über eine längere Zeitspanne betrachtet quasi-kontinuierliche Drehung des Lagerbolzens jeweils um einen von der Größe der Schwenkbewegung abhängigen Winkelbereich.

Vorzugsweise ist die Kupplungseinheit derart ausgebildet, daß die der Mitnahme dienende Verriegelung des Lagerbolzens lediglich mit dem Bauteil in der Schwenkrichtung vorliegt, in welcher der Lagerbolzen weniger hoch beansprucht ist (Anspruch 2).

Angewendet auf ein Abbruchwerkzeug bedeutet dies beispielsweise, daß der Lagerbolzen während der Öffnungsbewegung des Werkzeugblatts bzw. der Werkzeugblätter lediglich mit diesem bzw. diesen und während der den Abbruchvorgang bewirkenden Schließbewegung lediglich mit dem zugehörigen Tragkörper (Gehäuse bzw. Rahmen) verriegelt ist. Der Erfindungsgegenstand kann dabei dadurch vorteilhaft weitergebildet sein, daß der Lagerbolzen mit einer selbsttätig arbeitenden Nachschmierung ausgestattet ist; diese wird vorzugsweise dadurch ausgelöst, daß das Bauteil eine Schwenkbewegung in Richtung einer geringeren Beanspruchung ausführt.

Steuerungstechnisch läßt sich die automatische Nachschmierung in der Weise verwirklichen, daß ein den Schmiervorgang einleitendes Steuersignal - ggf. mit einstellbarer Zeitdauer - anliegt, solange der Lagerbolzen lediglich mit dem Bauteil verriegelt ist. Die Kupplungseinheit kann dementsprechend insbesondere mit einem Kontakt- oder Endschalter ausgestattet sein, über welchen (ggf. unter Zwischenschaltung eines Zeitschalters) eine Schmiermittel-Fördereinheit ansteuerbar ist.

Im Rahmen der erfindungsgemäßen Lehre kann die Kupplungseinheit aus zwei Zahnkupplungen bestehen, deren Verzahnung unter Einwirkung einer Rückstellkraft an einer Gegenverzahnung des Tragkörpers bzw. des Bauteils in Anlage gehalten ist (Anspruch 3). Die Verzahnung und Gegenverzahnung sind dabei derart ausgebildet, daß - abhängig von der Schwenkrichtung des Bauteils - jeweils eine Zahnkupplung mit der zugehörigen Gegenverzahnung verriegelt und die andere Zahnkupplung - entgegen der Wirkung der Rückstellkraft - entrastet ist. Bei einer besonders einfachen Ausführungsform des Erfindungsgegenstandes weist jede Zahnkupplung zwei Kupplungsteile auf, die in Richtung der Lagerbolzen-Längsachse federnd gegeneinander abgestützt sind, wobei das rückwärtige Kupplungsteil, welches auf der von der Gegenverzahnung des Tragkörpers bzw. Bauteils abgewandten Seite der Zahnkupplung liegt, derart angeordnet und ausgebildet ist, daß es relativ zum benachbarten Bauteil bzw. Tragkörper drehbar ist. Die in Rede stehende Ausführungsform kann dadurch weitergebildet sein, daß das rückwärtige Kupplungsteil sich in Richtung der Lagerbolzen-Längsachse an dem Bauteil bzw. Tragkörper abstützt (Anspruch 5).

Abweichend davon kann im Rahmen der erfindungsgemäßen Lehre jedoch auch eine Ausführung gewählt werden, bei welcher das rückwärtige Kupplungsteil beider Zahnkupplungen jeweils auch in axialer Richtung des Lagerbolzens an diesem befestigt ist.

Im einfachsten Fall bestehen die Kupplungsteile aus Scheiben, die in Richtung der Längsachse des Lagerbolzens relativ zueinander beweglich an diesem abgestützt sind (Anspruch 6). Die bewegliche Abstützung läßt sich dabei insbesondere dadurch verwirklichen, daß der Lagerbolzen an seinem Umfang zumindest ein Führungselement - beispielsweise in Gestalt einer Längsnut oder eines Längsvorsprungs - aufweist.

Die Erfindung wird nachfolgend anhand der Zeichnung im einzelnen erläutert.
Es zeigen:

Fig. 1          schematisiert einen Schnitt durch eine erfindungsgemäß ausgebildete Lagerung mit einer aus zwei Zahnkupplungen bestehenden Kupplungseinheit,

Fig. 2a, b      eine Teildraufsicht auf die Verzahnung und Gegenverzahnung der beiden Zahnkupplungen in Richtung des Pfeiles IIa bzw. IIb in Fig. 1 (in gegenüber Fig. 1 vergrößertem Maßstab),

Fig. 3          als Anwendungsbeispiel in Schrägansicht eine mit einem Hydraulikbagger zusammenwirkende Abbruchzange und

Fig. 4          in gegenüber Fig. 3 vergrößertem Maßstab schematisiert den grundsätzlichen Aufbau der in Fig. 3 dargestellten Abbruchzange.

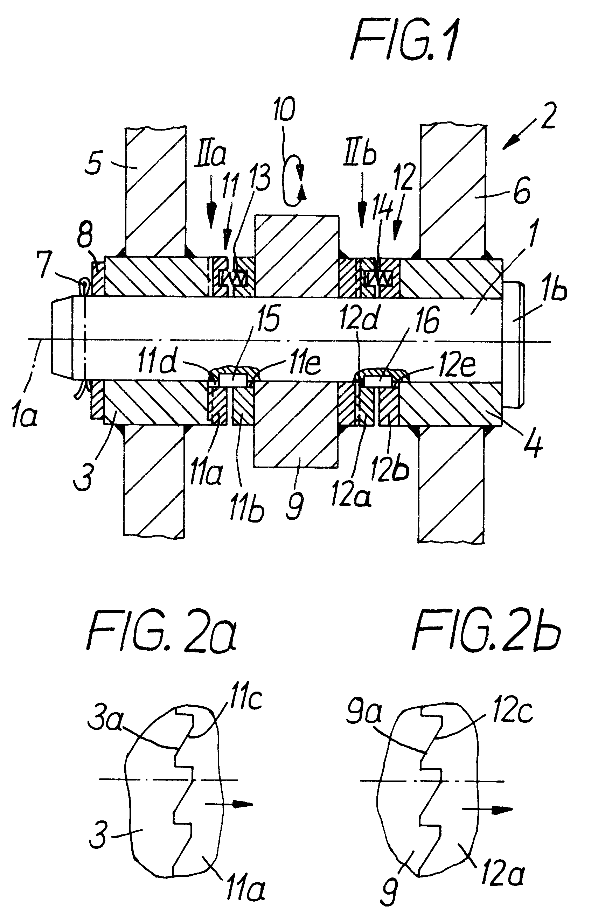

Bei der in Fig. 1 dargestellten Lagerung stützt sich ein Lagerbolzen 1 um seine Längsachse 1a drehbar an einem Tragkörper 2 ab, der zwei mit dem Lagerbolzen zusammenwirkende Lagerbuchsen 3, 4 und an diesen befestigte Seitenplatten 5, 6 aufweist. Die die Seitenplatten gegeneinander aussteifende Querverbindung kann in an sich bekannter Weise aus einer oder mehreren Querverstrebungen bestehen und ist nicht dargestellt. Die Fixierung des Lagerbolzens in Richtung seiner Längsachse ist dadurch sichergestellt, daß er sich einerseits über seinen Kopf 1b an der Lagerbuchse 4 und andererseits über eine durch einen Splint 7 gehaltene Scheibe 8 an der Lagerbuchse 3 abstützt. Zwischen den Lagerbuchsen 3 und 4 ist bezüglich des Lagerbolzens 1 drehbar ein Bauteil 9 gelagert, welches ggf. Schwenkbewegungen um die Längsachse 1a im Sinne des Doppelpfeils 10 ausführt.

Gemäß der Grundidee der Erfindung ist an dem Lagerbolzen 1 eine aus zwei Zahnkupplungen 11 und 12 bestehende Kupplungseinheit drehmomentfest angebracht, die - abhängig von der Schwenkrichtung des Bauteils 9 - selbsttätig den Lagerbolzen nur mit dem Bauteil 9 oder nur mit dem Tragkörper 2 verriegelt.

Jede Zahnkupplung weist als Kupplungsteile zwei Scheiben 11a, b bzw. 12a, b auf, die in der dargestellten Kupplungsstellung jeweils mit Abstand voneinander in Richtung der Lagerbolzen-Längsachse 1a über zwischen ihnen angeordnete Federelemente 13, 14 nachgiebig gegeneinander abgestützt sind. Die Scheiben 11a und 12a sind seitlich jeweils mit einer Verzahnung 11b bzw. 12b ausgestattet, die in eine Gegenverzahnung 3a bzw. 9a des Tragkörpers 2 (in Gestalt der Lagerbuchse 3) bzw. des Bauteils 9 einrastbar sind (vgl. Fig. 2a, b). Die rückwärtige Scheibe 11b bzw. 12b, welche auf der von der Gegenverzahnung 3a bzw. 9a abgewandten Seite der Zahnkupplung 11 bzw. 12 liegt, ist derart ausgebildet, daß sie relativ zum Bauteil 9 bzw. zur Lagerbuchse 4 drehbar ist; die Scheiben 11b und 12b liegen unter Einwirkung der Federelemente 13, 14 lediglich an der zuvor erwähnten Umgebung an.

Die Drehmomentverbindung zwischen den Zahnkupplungen 11, 12 und dem Lagerbolzen 1 besteht jeweils aus einer Paßfeder 15 bzw. 16, die gleichzeitig an dem Lagerbolzen 1 und den Scheiben 11a, b bzw. 12a, b gehalten ist.
Damit die Scheiben 11a, b und 12a, b bezüglich der Paßfeder 15 bzw. 16 Bewegungen in axialer Richtung des Lagerbolzens ausführen können, weisen sie jeweils eine an den Querschnitt der Paßfeder angepaßte Längsnut 11d, e und 12d, e auf.

Wie die Darstellung in Fig. 2a, b erkennen läßt, sind die Verzahnungen 11c und 12c der Zahnkupplungen 11, 12 und die Gegenverzahnungen 3a, 9a gleichartig ausgebildet mit der Folge, daß mit der Schwenkbewegung des Bauteils 9 jeweils eine Zahnkupplung geöffnet wird und die andere geschlossen bleibt.
Falls also das Bauteil (in Fig. 1 von der rechten Seite her betrachtet) eine Schwenkbewegung im Gegenuhrzeigersinn ausführt, wird die rechte Zahnkupplung 12 - entgegen der Rückstellkraft des zumindest einen Federelements 14 - entrastet; die Gegenverzahnung 9a verschiebt sich dabei in der Darstellung gemäß Fig. 2b bezüglich der Verzahnung 12c nach unten, so daß sich das Bauteil 9 unabhängig vom Lagerbolzen 1 drehen kann.
Die Bewegung des Bauteils in der erwähnten Richtung hat gleichzeitig zur Folge, daß die Verzahnung 11c (in Fig. 2a nach unten) gegen die Gegenverzahnung 3a der Lagerbuchse 3 gepreßt wird, so daß der Lagerbolzen 1 bezüglich des Tragkörpers 2 in dieser Richtung keine Drehbewegung ausführen kann.

Die Schwenkbewegung des Bauteils 9 in entgegengesetzter Richtung (d. h. in Fig. 1 von der rechten Seite her betrachtet im Uhrzeigersinn) führt dazu, daß die Verzahnung 9a gegen die Gegenverzahnung 12c trifft und die Kupplung 11 durch Verschieben der Scheibe 11a entgegen der Rückstellkraft des zumindest einen Federelements 13 nach rechts geöffnet wird. Das Bauteil 9 nimmt bei seiner Schwenkbewegung in dieser Richtung also den Lagerbolzen 1 unter Einwirkung der geschlossenen Zahnkupplung 12 mit, wobei die Zahnkupplung 11 wirkungslos ist.

Nach alledem wird mit der Erfindung eine von der Schwenkbewegung des Bauteils 9 abgeleitete, schrittweise Drehung des Lagerbolzens 1 ermöglicht, wobei der Drehwinkel von der Größe der Schwenkbewegung des Bauteils in der Mitnahmerichtung abhängt. Da der Lagerbolzen bei jedem Belastungszyklus weitergedreht und anschließend mit dem Tragkörper arretiert wird, ergibt sich - über viele Belastungszyklen gesehen - eine Vergleichmäßigung der Beanspruchung und des Verschleißes.

Die schrittweise Weiterdrehung kann im Zusammenwirken mit einer Schmiereinrichtung dazu ausgenutzt werden, den Schmiervorgang mit der Drehbewegung des Lagerbolzens bezüglich des Tragkörpers zu kombinieren. Die Mitnahme und Schmierung des Lagerbolzens sollte dabei anläßlich der Schwenkbewegung des Bauteils 9 erfolgen, bei welcher der Lagerbolzen weniger hoch beansprucht ist.

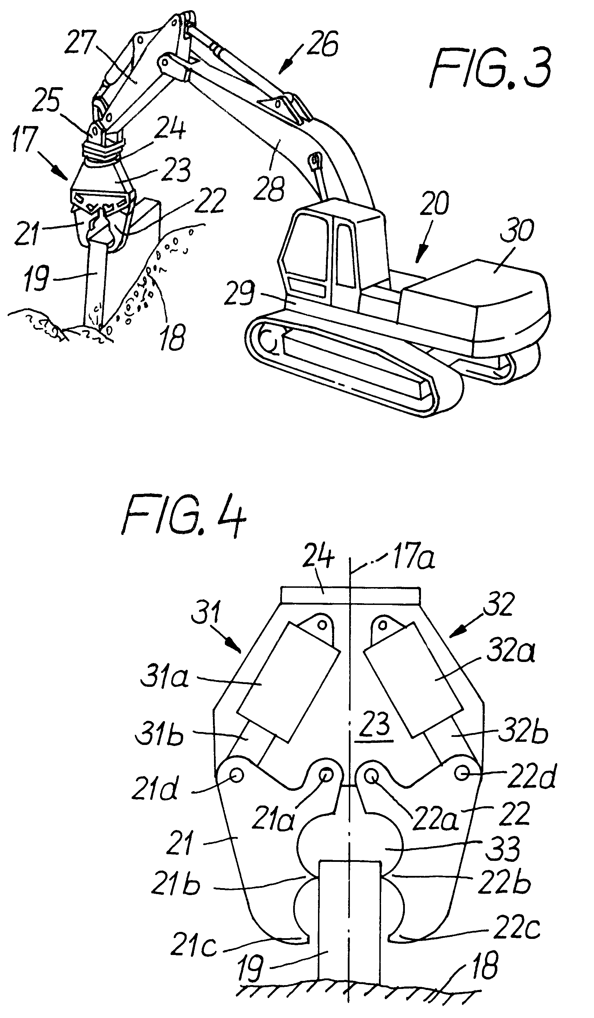

Die Fig. 3 und 4 zeigen als bevorzugtes Anwendungsbeispiel für die Erfindung den Einsatz einer Abbruchzange 17 bei der Zerkleinerung einer im Untergrund 18 festgehaltenen Betonplatte 19, wobei die Abbruchzange als Anbaugerät mit einem Hydraulikbagger 20 zusammenwirkt.

Die Abbruchzange 17 weist in an sich bekannter Weise als Hauptbestandteile zwei angetriebene Zangenbacken 21 und 22 auf, die beweglich an einem Tragkörper 23 gehalten sind. Dieser ist über eine Anschlußplatte 24 drehbar an einer Anschlußkonsole 25 befestigt, die ihrerseits schwenkbar mit einem Baggerausleger 26 - bestehend im wesentlichen aus einem vorderen Schwenkarm 27 und einem hinteren Tragarm 28 - in Verbindung steht. Letzterer ist bezüglich der Plattform 29 des Hydraulikbaggers schwenkbar gehalten, die auch das als Energiequelle dienende Hydraulikaggregat 30 aufnimmt; dieses ermöglicht auch den Betrieb der Abbruchzange 17.

Die Antriebseinheit zur Betätigung der beiden Zangenbacken 21 und 22 besteht aus zwei Zylinderaggregaten 31 bzw. 32, die über ihr Zylindergehäuse 31a, 32a, und ihre Kolbenstange 31b, 32b gelenkig an dem Tragkörper 23 bzw. an der zugehörigen Zangenbacke 21 oder 22 befestigt sind. Die letztgenannten Bestandteile stützen sich außerhalb des Bereichs der Kolbenstangen 31b, 32b über ein Drehlager 21a bzw. 22a am Tragkörper 23 ab und bilden die veränderliche Maulöffnung 33 der Abbruchzange, in welche die zu zerkleinernde Betonplatte 19 während des Abbruchvorgangs hineinragt.

Bei der dargestellten Ausführungsform (vgl. insbesondere Fig. 4) weist jede Zangenbacke 21 und 22 - in Richtung ihrer Längserstreckung und in Richtung auf die Längsachse 17a der Abbruchzange 17 gesehen - zwei vorspringende Zähne 21b, c. bzw. 22b, c auf, die unter Einwirkung der von den Zylinderaggregaten 31, 32 ausgeübten Schließkraft auf die Betonplatte 19 einwirken.

Die Verbindung zwischen den Kolbenstangen 31b, 32b und den Zangenbacken 21, 22 ist ebenfalls als Drehlager 21d bzw. 22d ausgebildet.

Die Drehlager 21a, d und 22a, d sind unter Verwendung jeweils eines Lagerbolzens 1 in der zuvor beschriebenen Weise (vgl. dazu Fig. 1 und Fig. 2a, b) mit der erfindungsgemäßen Drehvorrichtung ausgestattet. Diese ist dabei zweckmäßig in der Weise ausgebildet, daß die Mitnahme des jeweiligen Lagerbolzens über die Zangenbacke 21 bzw. 22 nur dann bewirkt wird, falls die Abbruchzange 17 - bedingt durch die Einfahrbewegung der Kolbenstangen 31b, 32b in Richtung auf die Zylindergehäuse 31a, 32a - geöffnet wird. Die schrittweise Weiterdrehung der Lagerbolzen in den Drehlagerungen wird demnach immer nur dann ausgelöst, wenn die Lagerbolzen verhältnismäßig niedrig beansprucht sind. Selbstverständlich können im Rahmen der erfindungsgemäßen Lehre erforderlichenfalls auch die Lager für die Abstützung der Zylindergehäuse 31a, 32a am Tragkörper 23 mit der bereits beschriebenen Drehvorrichtung ausgestattet sein.

Für den Fall, daß der Lagerbolzen trotz der geschilderten Maßnahmen blockiert, sollte der Erfindungsgegenstand eine Sicherung in Gestalt einer Sollbruchstelle aufweien.

Dazu können insbesondere die Scheiben 11a, 12a derart ausgebildet sein, daß durch Abscheren ihrer Verzahnungen 11c, 12c Beschädigungen an den Teilen 3, 4 und 9 verhindert werden.

**Patentansprüche**

1. Drehvorrichtung für einen insbesondere hochbeanspruchten Lagerbolzen, der um seine Längsachse drehbar an einem Tragkörper gehalten ist und an dem sich ein Bauteil schwenkbar abstützt,
   **dadurch gekennzeichnet,**
   daß an dem Lagerbolzen (1) drehmomentfest eine Kupplungseinheit (11, 12) angebracht ist, die - abhängig von der Schwenkrichtung des Bauteils (9) - den Lagerbolzen (1) entweder nur mit dem Bauteil (9) oder nur mit dem Tragkörper (2) verriegelt.

2. Drehvorrichtung nach Anspruch 1, gekennzeichnet durch eine derartige Ausbildung der Kupplungseinheit (11, 12), daß die Verriegelung des Lagerbolzens (1) lediglich mit dem Bauteil (9) in der Schwenkrichtung vorliegt, in welcher der Lagerbolzen weniger hoch beansprucht ist.

3. Drehvorrichtung nach zumindest einem der vorhergehenden Ansprüche, dadurch gekennzeichnet, daß die Kupplungseinheit aus zwei Zahnkupplungen (11, 12) besteht, deren Verzahnung (11c bzw. 12c) unter Einwirkung einer Rückstellkraft an einer Gegenverzahnung (3a bzw. 9a) des Tragkörpers (2) bzw. des Bauteils (9) in Anlage gehalten ist.

4. Drehvorrichtung nach Anspruch 3, dadurch gekennzeichnet, daß jede Zahnkupplung (11, 12) zwei Kupplungsteile (11a, b bzw. 12a, b) aufweist, die in Richtung der Lagerbolzen-Längsachse (1a) federnd gegeneinander abgestützt sind, wobei das rückwärtige Kupplungsteil (11b bzw. 12b), welches auf der von der Gegenverzahnung (3a bzw. 9a) des Tragkörpers (2) bzw. Bauteils (9) abgewandten Seite der Zahnkupplung (11, 12) liegt, derart angeordnet und ausgebildet ist, daß es relativ zum benachbarten Bauteil (9) bzw. Tragkörper (2) drehbar ist.

5. Drehvorrichtung nach Anspruch 4, dadurch gekennzeichnet, daß das rückwärtige Kupplungsteil (11b bzw. 12b) sich in Richtung der Lagerbolzen-Längsachse (1a) an dem Bauteil (9) bzw. Tragkörper (2) abstützt.

6. Drehvorrichtung nach zumindest einem der Ansprüche 4 und 5, dadurch gekennzeichnet, daß die Kupplungsteile aus Scheiben (11a, b bzw. 12a, b) bestehen, die in Richtung der Längsachse (1a) des Lagerbolzens (1) relativ zueinander beweglich an diesem abgestützt sind.

# FIG.1

# FIG. 2a

# FIG.2b

FIG.3

FIG.4

Europäisches
Patentamt

**EUROPÄISCHER RECHERCHENBERICHT**

Nummer der Anmeldung

EP    92 10 4946

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 575 837 (DEMAG) | 1,2 | E02F9/00 |
| Y | * das ganze Dokument * | 3-6 | F16D41/22 |
|   | --- |   | F16H31/00 |
| Y | EP-A-0 318 459 (VOEST-ALPINE) | 3-6 |   |
|   | * das ganze Dokument * |   |   |
|   | ----- |   |   |

RECHERCHIERTE
SACHGEBIETE (Int. Cl.5)

E02F
F16D
F16H

Der vorliegende Recherchenbericht wurde für alle Patentansprüche erstellt

| Recherchenort | Abschlußdatum der Recherche | Prüfer |
|---|---|---|
| DEN HAAG | 18 JUNI 1992 | BALDWIN D. R. |